**Europäisches Patentamt**

**European Patent Office**

**Office européen des brevets**

(19)

(11) Veröffentlichungsnummer : **0 476 361 B1**

(12) # EUROPÄISCHE PATENTSCHRIFT

(45) Veröffentlichungstag der Patentschrift :
**02.11.94 Patentblatt 94/44**

(51) Int. Cl.$^5$ : **G01V 9/04**

(21) Anmeldenummer : **91114246.1**

(22) Anmeldetag : **24.08.91**

---

(54) **Reflexionslichtschranke.**

---

(30) Priorität : **20.09.90 DE 4029766**

(43) Veröffentlichungstag der Anmeldung :
**25.03.92 Patentblatt 92/13**

(45) Bekanntmachung des Hinweises auf die
Patenterteilung :
**02.11.94 Patentblatt 94/44**

(84) Benannte Vertragsstaaten :
**CH DE FR GB IT LI NL**

(56) Entgegenhaltungen :
**EP-A- 0 105 528**
**US-A- 3 668 404**

(56) Entgegenhaltungen :
**PATENT ABSTRACTS OF JAPAN vol. 7, no.
245 (P-233)(1390) 29. Oktober 1983 ; & JP-A-58
132 216**
**PATENT ABSTRACTS OF JAPAN vol. 14, no.
581 (P-1147) 26. Dezember 1990 ; & JP-A-22
051 782**

(73) Patentinhaber : **Leuze electronic GmbH + Co.
In der Braike 1
D-73277 Owen (DE)**

(72) Erfinder : **Spratte, Hans-Hermann, Dipl.-Ing.
Villastrasse 30
W-7312 Kirchheim/Teck (DE)**
Erfinder : **Pepperl, Rüdiger, Prof.Dr.
Bismarckstrasse 58
W-4030 Ratingen (DE)**

---

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Reflexionslichtschranke gemäß dem Oberbegriff des Anspruchs 1.

Derartige, durch das DE-GM 7300004 bekannte Reflexionslichtschranken weisen den Nachteil auf,daß nur ein geringer Teil der Leistung des Sendelichtbündels vom Retroreflektor auf die Detektorlinse zurückgeworfen wird. Der größte Teil des Sendelichtbündels wird auf die dem Lichtsender vorgeordnete Linse reflektiert.

Bei Retroreflektoren, die aus vielen kleinen rasterförmig nebeneinander angeordneten Tripelprismen bestehen, ist tatsächlich nur eine Aufweitung der Beleuchtungsstärke durch den Parallelversatz (wenige Millimeter) der reflektierten Strahlen gegenüber den Sendestrahlen vorhanden.

Dadurch, daß bei realen Retroreflektoren geringe Winkelabweichungen der reflektierten Strahlen gegenüber den Sendestrahlen hinzukommen, wobei die Winkelabweichungen durch Winkelfehler in den Tripelprismen und andere Baufehler der Tripelprismenreflektoren hervorgerufen werden, kann eine für bestimmte Anwendungsfälle noch ausreichende Strahlungsleistung durch die Empfangslinse auf den Lichtempfänger (Detektor) gelangen. Genauer gesagt kann nur die im Flankenabfall der Bestrahlungsstärke neben Sendelinse enthaltende Strahlungsleistung auf dem Lichtempfänger gesammelt werden.

Demzufolge eignen sich die sogenannten zweiäugigen Reflexionslichtschranken weder für kurze noch für große Reichweiten besonders gut. Auch bei mittleren Reichweiten gelangt nur ein geringer Bruchteil der Sendeleistung nach der Reflexion am Retroreflektor zum Lichtempfänger.

Der Erfindung liegt die Aufgabe zugrunde, Reflexionslichtschranken der gattungsgemäßen Art dahingehend zu verbessern, daß der auf die Empfangslinse und damit auf den Lichtempfänger gelangende Anteil der Sendeleistung nach der Reflexion am Retroreflektor vergleichsweise wesentlich größer wird und die Reflexionslichtschranke durch die damit einhergehende Wirkungsgradverbesserung sich für kurze, mittlere und große Reichweiten gleichermaßen gut eignet.

Diese Aufgabe ist erfindungsgemäß mit den Merkmalen im kennzeichnenden Teil des Anspruchs 1 gelöst.

Weiterbildungen und zweckmäßige sowie vorteilhafte Ausgestaltungen der Erfindung sind in den abhängigen Ansprüchen charakterisiert.

Die Erfindung wird im nachstehenden anhand der Zeichnungen erläutert.

Es zeigen:

| | |
|---|---|
| Fig. 1 | eine herkömmliche zweiäugige Reflexionslichtschranke in schematischer Darstellung, |
| Fig. 2 | die Bestrahlungsstärke E(x) in der Ebene der Sendelinse einer Reflexionslichtschranke gemäß Figur 1, |
| Fig. 3 | eine zweiäugige Reflexionslichtschranke mit einem optischen Mittel zur Erzeugung eines Winkelversatzes $\beta_1$ zwischen Sendelichtbündel und Empfangslichtbündel, |
| Fig. 4a und 4 b | die Wirkung eines im Strahlengang vom Lichtsender zum Lichtempfänger angeordneten Beugungsgitters, |
| Fig. 5 | den Strahlenverlauf an einer Fresnelschen Zonenplatte in off-axis Ausführung, |
| Fig. 6 | einen Retroreflektor mit beabsichtigten Winkelfehlern in den Prismen eines Kunststofftripelspiegels. |

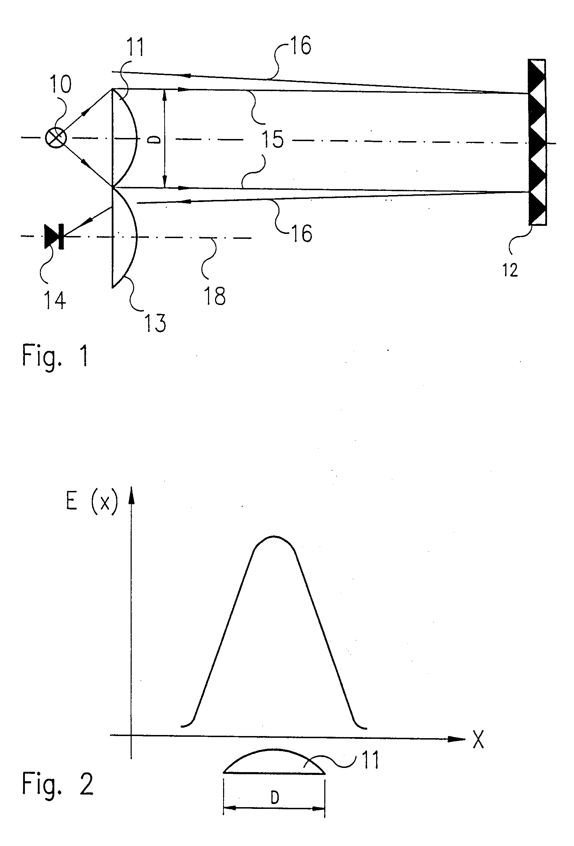

Die sogenannte zweiäugige Reflexionslichtschranke herkömmlicher Ausführung, wie sie durch Figur 1 schematisch veranschaulicht wird, besteht aus einem Lichtsender 10 (Lichtquelle), einer diesem vorgeordneten Sendelinse 11, einem Retroreflektor 12 in Form eines Kunststofftripelspiegels, einer Empfangslinse 13 und aus einem dieser nachgeordneten Lichtempfänger 14 (Detektor). Das Sendelichtbündel ist mit 15 bezeichnet. Das Bezugszeichen 16 kennzeichnet das Empfangslichtbündel.

Bei einer derartigen Reflexionslichtschranke entsteht, wie eingangs bereits erwähnt worden ist, ein Flankenabfall der Bestrahlungsstärke. Der grundsätzliche Verlauf der Bestrahlungsstärke E(x) in der Ebene der Sendelinse 11 ist in Figur 2 dargestellt. Auf dem Lichtempfänger 14 kann demgemäß über die Empfangslinse 13, wie bereits ausgeführt worden ist, nur die im Flankenabfall der Beleuchtungsstärke neben der Sendelinse 11 enthaltene Strahlungsleistung gesammelt werden.

Bei einer zweiäugigen Reflexionslichtschranke nach der Erfindung wird ein großer Teil der Sendeleistung bzw. des Sendelichtbündels 15 nach oder bei der Reflexion am Retroreflektor 12 durch optische Mittel oder Maßnahmen auf die neben der Sendelinse 11 angeordnete Empfangslinse 13 umgelenkt.

Dabei können Sende- und Empfangslinse 11, 13 untereinander oder nebeneinander angeordnet sein.

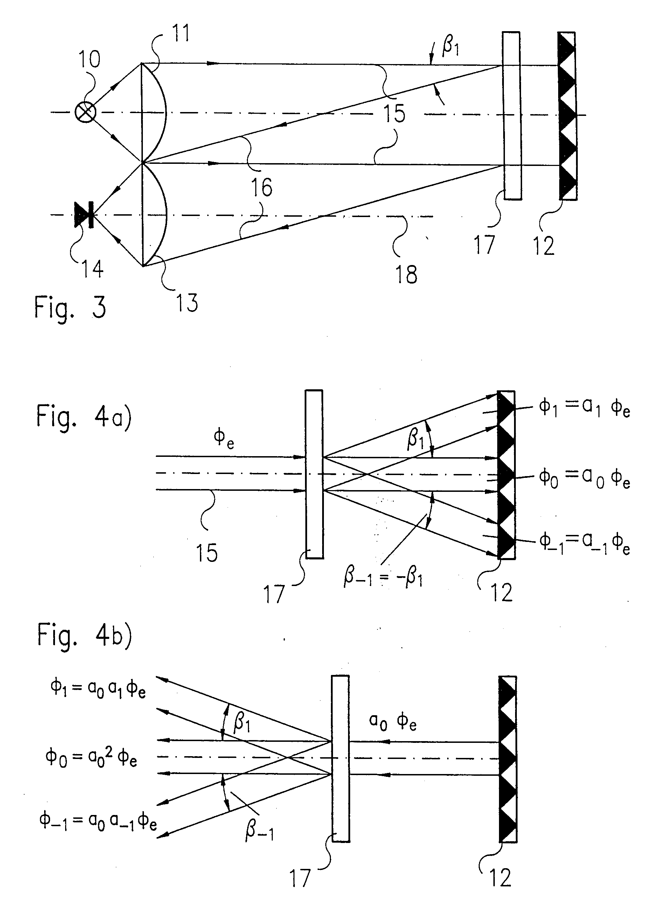

Figur 3 zeigt ein Ausführungsbeispiel der Erfindung, bei dem als optisches Mittel ein in den Strahlengang vom Lichtsender 10 zum Lichtempfänger 14 eingesetztes Beugungsgitter 17 gewählt ist, durch das ein Winkelversatz $\beta_1$ zwischen Sendelichtbündel 15 und Empfangslichtbündel 16 erzeugt wird. Durch Anpassung des Winkelversatzes $\beta_1$ an die Reichweite der Reflexionslichtschranke mit nebeneinanderliegender Sende- und Empfangslinse 11, 13 kann das Empfangssignal am Lichtempfänger 14 (Detektor) optimiert werden.

Das Beugungsgitter 17, das beim Ausführungsbeispiel gemäß Figur 3 räumlich vor dem Retroreflektor 12 angeordnet ist, aber auch Bestandteil des Reflektors sein kann, kann durch verschiedene Ausführungsarten verkörpert sein. Als geeignet haben sich als Amplituden- oder Phasengitter ausgebildete Beugungsgitter erwiesen, wobei reine Phasengitter gegenüber Amplituden-Gittern den Vorteil aufweisen, daß keine Lichtleistung durch Absorption verloren geht.

Die Wirkungsweise der Beugungsgitter ist folgende (siehe hierzu Figuren 4a und 4b):

Fällt ein paralleles Lichtbündel auf ein Beugungsgitter auf, so tritt ein Teil $\Phi_o$ davon in der Auftreffrichtung unverändert durch das Gitter hindurch. Dieser Teil wird als nullte Beugungsordnung bezeichnet. Daneben entstehen nach dem Durchgang weitere Lichtbündel mit der Leistung $\Phi_n$, die unter den Winkeln n $\beta_1$ (n = ± 1, ± 2,....) gegen die Richtung des einfallenden Lichtbündels abgelenkt worden sind (n-te Beugungsordnungen). Die Leistungen dieser Lichtbündel ergeben sich aus der Leistung des einfallenden Lichtbündels $\Phi_e$ aus der Beziehung:

$$\Phi_n = a_n \Phi_e, (n = 0, \pm 1, \pm 2, ....).$$

Aus Energieerhaltungsgründen gilt:

$$\sum_n a_n = 1 - A,$$

wobei A den Absorptionskoeffizienten für die Leistung des einfallenden Lichtbündels bezeichnet.

Für das ideale Phasengitter ist A = 0.

Die Zahl der auftretenden Beugungsordnungen und die Leistung in den einzelnen Beugungsordnungen ist von der Struktur der Einzelperiode des Beugungsgitters abhängig.

Da das Beugungsgitter 17 von den Lichtbündeln nach der Reflexion am Retroreflektor 12 nochmals durchlaufen wird, ist die Wirkungsweise des Beugungsgitters auch für diese Transmissionsrichtung dargestellt (Fig. 4b). Die Winkellage der einzelnen Beugungsordnungen ist bei der Rückwärtsrichtung an der nullten Beugungsordnung gespiegelt.

Bei kleinen Einfallswinkeln und grober Gitterstruktur gilt für die Winkel der einzelnen Beugungsordnungen bezüglich der optischen Achse:

$$\pm n \beta_1, n = 0, \pm 1, \pm 2, ...$$

Bei feiner Gitterstruktur und großen Einfallswinkeln muß die Gittergleichung herangezogen werden.

Ohne Beschränkung der Allgemeingültigkeit sei die Aufteilung der Strahlungsleistung für ein reines Phasengitter 17 mit den Beugungsordnungen n = 0, + 1 erläutert. Das Phasengitter 17 wird unmittelbar vor dem Retroreflektor angebracht. Das Sendelichtbündel 15 wird nach dem Durchgang durch das Phasengitter 17 in die Lichtbündel der nullten und ersten Beugungsordnung aufgespalten. Nach der Reflexion am Retroreflektor 12 wird das Lichtbündel der nullten Beugungsordnung nochmals in je ein Lichtbündel der nullten und ersten Beugungsordnung aufgespalten. Das Lichtbündel der nullten Beugungsordnung läuft in die Sendelinse 11 zurück, genau wie in dem Fall der zweiäugigen Lichtschranke ohne Beugungsgitter vor dem Retroreflektor 12. Das Lichtbündel der ersten Beugungsordnung bildet den Winkel $\beta_1$ mit der optischen Achse 18 und stellt ein Empfangslichtbündel dar, welches auf die Empfangslinse 13 durch geeignete Wahl des Winkels $\beta_1$ ausgerichtet werden kann.

Das nach dem ersten Durchgang durch das Phasengitter 17 erzeugte Lichtbündel der ersten Beugungsordnung wird nach der Reflexion am Retroreflektor 12 beim zweiten Durchgang durch das Phasengitter 17 ebenso in zwei Lichtbündel aufgespalten. Eines läuft ebenfalls in die Sendelinse 11 zurück. Das andere bildet den Winkel $(-\beta_1)$ mit der optischen Achse 18. Es stellt ein weiteres Empfangslichtbündel dar, das auf der anderen Seite der optischen Achse 18 verläuft und von einer zweiten Empfängerlinse gesammelt werden könnte.

Die Leistung $\Phi_E$ in jedem der beiden Empfangslichtbündel beträgt:

$$\Phi_E = a_0 a_1 \Phi_s$$

wobei $0_s$ die Leistung im Sendelichtbündel 15 beträgt. Die Leistung der Empfangslichtbündel wird maximal für $a_o = a_1 = \frac{1}{2}$. Jedes Empfangslichtbündel enthält dann $\frac{1}{4}$ der Leistung des Sendelichtbündels, die andere Hälfte der Leistung des Sendelichtbündels wird in die Sendelinse zurückreflektiert.

Bei einem zweidimensionalen Kreuzgitter entstehen Lichtbündel der verschiedenen Beugungsordnungen, die räumlich um das einfallende Lichtbündel angeordnet sind. Auf diese Art und Weise können Empfangslichtbündel erzeugt werden, die räumlich rund um die Sendelinse 11 angeordnet sind und von entsprechend aufgestellten Empfangslinsen 13 gesammelt werden können.

Statt eines einfachen Beugungsgitters bzw. Kreuzgitters kann auch eine rotationssymetrische Gitterstruktur verwendet werden, wie sie beispielsweise bei der Interferenz einer ebenen Welle und einer Kugelwelle auf einer Hologrammplatte erzeugt werden kann. Diese Struktur ist als Fresnelsche Zonenplatte bekannt. Durch diese Fresnelsche Zonenplatte wird bei der Beugung eines parallelen Lichtbündels, neben der nullten Beugungsordnung, ein konvergentes Lichtbündel (erste Beugungsordnung) und ein divergentes Lichtbündel (minus erste Beugungsordnung) erzeugt. Besonders vorteilhalt für die Anwendung bei der zweiäugigen Reflexionslichtschranke ist eine off-axis-Fresnelsche Zonenplatte, bei der das oben genannte konvergente und divergente Lichtbündel unter dem Winkel $\beta_1$ bzw. (-$\beta_1$) zur optischen Achse austritt. Die Funktionswiese dieser Zonenplatte in der zweiäugigen Reflexionslichtschranke ist analog wie bei dem oben ausgeführten Beispiel des Phasengitters. Es kann jedoch zusätzlich die Lichtsammelwirkung für die + 1. Beugungsordnung ausgenutzt werden.

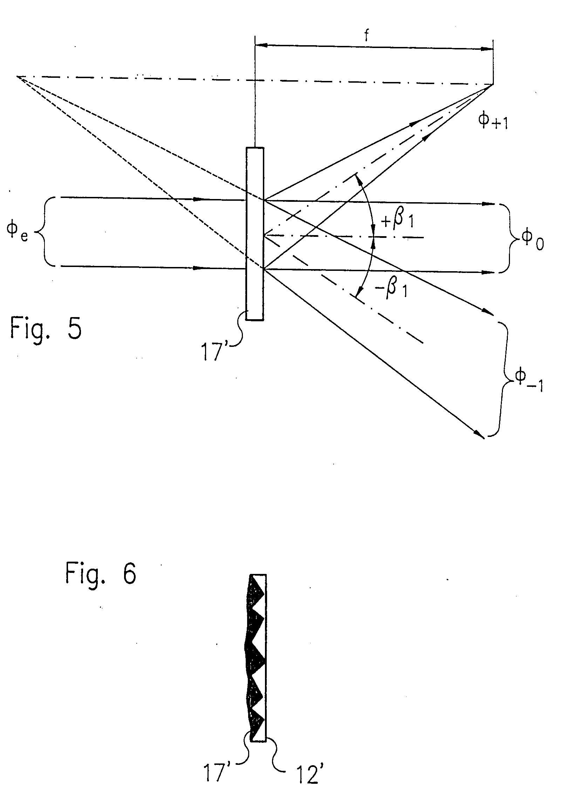

In Figur 5 ist der Strahlverlauf an der Fresnelschen Zonenplatte 17 schematisch dargestellt. Die Brennweite f der Fresnelschen Zonenplatte für die + 1. Beugungsordnung wird vorteilhaft an die Reichweite der zweiäugigen Reflexionslichtschranke angepaßt.

Die Auffächerung des am Kunststofftripelprismenreflektor 12 reflektierten Lichtbündels 15 durch Baufehler einzelner Kunststofftripelprismen wurde eingangs erwähnt. Dieser Effekt kann durch Beugung an einer vor dem Kunststofftripelprismenreflektor 12 angebrachten Streuscheibe gezielt verstärkt werden. Die Streuscheibe besitzt eine statistische Phasenstruktur. Deshalb entstehen keine räumlich getrennten Lichtbündel verschiedener Beugungsordnungen, sondern eine keulenförmige Richtcharakteristik für das transmittierte Lichtbündel.

Durch geeignete Wahl des Phasenhubes und des mittleren Durchmessers der Streuzentren kann die Form der Richtcharakteristik an die Reichweite der zweiäugigen Reflexionslichtschranke angepaßt werden.

Die Beugung ist ein Interferenzphänomen. Deshalb muß das erfindungsgemäße Beugungsgitter bzw. die erfindungsgemäße Streuscheibe 17 mit interferenzfähigem Licht (räumlich und zeitlich mindestens teilweise kohärent) beleuchtet werden. Falls als Lichtquelle für die Lichtschranke eine Lumineszenzdiode verwendet wird, welche in der vorderen Brennebene der Sendelinse angeordnet ist, ist das so erzeugte Sendelichtbündel ausreichend räumlich kohärent. Der ungünstigste Fall bezüglich der räumlichen Kohärenz des Sendelichtbündels liegt vor, wenn die leuchtende Fläche der Lumineszenzdiode durch die Sendelinse auf das Beugungsgitter bzw. die Streuscheibe abgebildet wird. Die zeitliche Kohärenz des Sendelichtbündels ist durch die Monochromasie der Lumineszenzdiode gegeben.

Ein für den jeweiligen Zweck geeignetes Beugungsgitter 17 kann auch integrierender Bestandteil des Retroreflektors 12 sein. Desweiteren besteht die Möglichkeit, Retroreflektoren z.B. in Form von Kunststofftripelprismen gezielt mit Winkelfehlern in den Tripelprismen und/oder mit sonstigen Baufehlern zu fertigen.

In Figur 6 ist ein solcher Retroreflektor 12′ schematisch veranschaulicht. Die Winkelfehler sind hierbei mit 17′ bezeichnet.

Die Vorrichtungen zur Erzeugung des Winkelversatzes zwischen Sende- und Empfangslichtbündel 15, 16 können beispielsweise als holografisch-optische Elemente hergestellt werden. Auch synthetische Hologramme wie z.B. die DAMMANN-Gitter sind denkbar. Die billige Massenherstellung aus Kunststoff ist mit den Methoden möglich, die zur Herstellung von Prägehologrammen benutzt werden.

**Patentansprüche**

1. Reflexionslichtschranke, bestehend aus einem Lichtsender mit diesem nachgeordneter Sendelinse, einem vom Sendelichtbündel beaufschlagten Retroreflektor und einem auf derselben Seite, wie der Lichtsender, angeordneten, einen elektrischen Wandler enthaltenden Lichtempfänger, mit diesem vorgeordneter Empfangslinse, wobei Sendelinse und Empfangslinse nebeneinander angeordnet sind, dadurch gekennzeichnet, daß die vom Retroreflektor (12) auf die Empfangslinse (13) reflektierte Strahlungsleistung durch im Strahlengang vom Lichtsender (10) zum Lichtempfänger (14) vorgesehene, die Ausbreitungsrichtung des Empfangslichtbündels (16) auf die optische Achse (18) der Empfangslinse (13) ausrichtende, optische Mittel (17, 17′) erhöht ist.

2. Reflexionslichtschranke nach Anspruch 1, dadurch gekennzeichnet, daß zur Erzielung eines optischen Winkelversatzes ($\beta_1$) zwischen Sendelichtbündel (15) und Empfangslichtbündel (16) wenigstens ein Beugungsgitter (17) in den Strahlengang eingefügt ist.

3. Reflexionslichtschranke nach Anspruch 2, dadurch gekennzeichnet, daß als Beugungsgitter (17) eine Platte mit einer komplexen Amplitudenstruktur gewählt ist.

4. Reflexionslichtschranke nach Anspruch 2, dadurch gekennzeichnet, daß als Beugungsgitter (17) eine Platte dient, auf die ein eindimensionales Gitter aufgebracht ist.

**5.** Reflexionslichtschranke nach Anspruch 2, dadurch gekennzeichnet, daß als Beugungsgitter (17) eine mit einem Kreuzgitter versehene Platte vorgesehen ist.

**6.** Reflexionslichtschranke nach Anspruch 2, dadurch gekennzeichnet, daß als Beugungsgitter (17) eine mit einer Fresnelschen Zonenstruktur, insbesondere in off-axis Ausführung, versehene Platte vorgesehen ist.

**7.** Reflexionslichtschranke nach Anspruch 2, dadurch gekennzeichnet, daß als Beugungsgitter (17) eine Streuscheibe mit einem solchen Phasenhub und mittleren Streuzentrendurchmesser gewählt ist, daß die sich ergebende Richtcharakteristik des Empfangslichtbündels (16) die Empfangslinse (13) voll ausleuchtet.

**8.** Reflexionslichtschranke nach Anspruch 2, dadurch gekennzeichnet, daß das Beugungsgitter (17) aus einer transparenten Kunststoffplatte mit eingeprägter Phasenstruktur besteht.

**9.** Reflexionslichtschranke nach Anspruch 2, dadurch gekennzeichnet, daß die durch ein Beugungsgitter (17) um das Sendelichtbündel (15) herum erzeugten Empfangslichtbündel (16) als Indikator für die Eingriffsrichtung eines Gegenstandes in die Überwachungsstrecke der Lichtschranke dienen.

**10.** Reflexionslichtschranke nach einem der vorhergehenden Ansprüche, dadurch gekennzeichnet, daß das Beugungsgitter (17) räumlich vor dem Retroreflektor (12) angeordnet ist.

**11.** Reflexionslichtschranke nach einem der vorhergehenden Ansprüche, dadurch gekennzeichnet, daß das Beugungsgitter (17) Bestandteil des Retroreflektors (12) ist.

**12.** Reflexionslichtschranke nach Anspruch 1, dadurch gekennzeichnet, daß die optischen Mittel (17′) durch einen mit Winkel- und Baufehlern in den Prismen versehenen Tripelprismenreflektor (12′) verkörpert sind.

**13.** Reflexionslichtschranke nach einem der vorhergehenden Ansprüche, dadurch gekennzeichnet, daß der Retroreflektor (12) als Kunststofftripelprismenreflektor ausgebildet ist.

## Claims

**1.** Reflection light barrier consisting of a light transmitter with a transmitting lens arranged downstream thereof, a return reflector acted on by the transmitted light beam and a light receiver, which is arranged on the same side as the light transmitter and contains an electrical transducer, with a receiving lens arranged upstream thereof, wherein the transmitting lens and the receiving lens are each arranged beside the other, characterised thereby, that the radiation power reflected by the return reflector (12) to the receiving lens (13) is increased by optical means (17, 17′), which are provided in the ray path from the light transmitter (10) to the light receiver (14) and direct the direction of propagation of the received light beam (16) to the optical axis (18) of the receiving lens (13).

**2.** Reflection light barrier according to claim 1, characterised thereby, that at least one diffraction grating (17) is inserted into the ray path for the achievement of an optical angular displacement ($\beta_1$) between the transmitted light beam (15) and the received light beam (16).

**3.** Reflection light barrier according to claim 2, characterised thereby, that a plate with a complex amplitude structure is chosen as diffraction grating (17).

**4.** Reflection light barrier according to claim 2, characterised thereby, that a plate, onto which a unidimensional grating is applied, serves as diffraction grating (17).

**5.** Reflection light barrier according to claim 2, characterised thereby, that a plate, which is provided with a cross grating, is provided as diffraction grating (17).

**6.** Reflection light barrier according to claim 2, characterised thereby, that a plate which is provided with a Fresnel zone structure, in particular in off-axis execution, is provided as diffraction grating (17).

**7.** Reflection light barrier according to claim 2, characterised thereby, that a scatter plate of such a phase variation and mean scattering centre diameter is chosen as diffraction grating (17) that the resultant directional characteristic of the received light beam (16) fully illuminates the receiving lens (13).

8. Reflection light barrier according to claim 2, characterised thereby, that the diffraction grating (17) consists of a transparent synthetic material plate with impressed phase structure.

9. Reflection light barrier according to claim 2, characterised thereby, that the received light beams (16), which are produced around the transmitted light beam (15) by a diffraction grating (17), serve as indicator for the direction of engagement of an article into the monitoring path of the light barrier.

10. Reflection light barrier according to one of the preceding claims, characterised thereby, that the diffraction grating (17) is arranged spatially in front of the return reflector (12).

11. Reflection light barrier according to one of the preceding claims, characterised thereby, that the diffraction grating (17) is a component of the return reflector (12).

12. Reflection light barrier according to claim 1, characterised thereby, that the optical means (17′) are embodied by a triple prism reflector (12′) provided with errors of construction and angle in the prisms.

13. Reflection light barrier according to one of the preceding claims, characterised thereby, that the return reflector (12) is constructed as triple prism reflector of synthetic material.

## Revendications

1. Cellule photoélectrique à réflexion, constituée par un émetteur de lumière pourvu d'une lentille émettrice montée en aval, par un réflecteur sur lequel arrive le faisceau lumineux de l'émetteur, et par un récepteur de lumière qui est disposé du même côté que l'émetteur de lumière, qui contient un transducteur électrique et qui comprend une lentille réceptrice montée en amont, la lentille émettrice et la lentille réceptrice étant disposées l'une à côté de l'autre, caractérisée par le fait que l'énergie du rayonnement renvoyé par le réflecteur (12) sur la lentille réceptrice (13) est augmentée par des moyens optiques (17, 17′) qui sont prévus sur le trajet des rayons allant de l'émetteur de lumière (10) au récepteur de lumière (14) et qui orientent la direction de propagation du faisceau lumineux (16) du récepteur vers l'axe optique (18) de la lentille réceptrice (13).

2. Cellule photoélectrique à réflexion selon la revendication 1, caractérisée par le fait qu'au moins un réseau de diffraction (17) est introduit dans le trajet des rayons afin d'obtenir un écart angulaire ($\beta_1$) entre les rayons du faisceau lumineux (15) de l'émetteur et du faisceau lumineux (16) du récepteur.

3. Cellule photoélectrique à réflexion selon la revendication 2, caractérisée par le fait que l'on choisit comme réseau de diffraction (17) une plaque pourvue d'une structure complexe de diffraction d'amplitude.

4. Cellule photoélectrique à réflexion selon la revendication 2, caractérisée par le fait qu'une plaque sur laquelle est tracé un réseau à une dimension sert de réseau de diffraction (17).

5. Cellule photoélectrique à réflexion selon la revendication 2, caractérisée par le fait qu'il est prévu comme réseau de diffraction (17) une plaque pourvue d'un réseau croisé.

6. Cellule photoélectrique à réflexion selon la revendication 2, caractérisée par le fait qu'il est prévu comme réseau de diffraction (17) une plaque pourvue d'une structure de diffraction à zones de Fresnel, en particulier selon une réalisation à axe décalé.

7. Cellule photoélectrique à réflexion selon la revendication 2, caractérisée par le fait que l'on utilise comme réseau de diffraction (17) un diffuseur dont l'amplitude du déphasage et le diamètre moyen des centres de diffusion sont choisis d'une manière telle que le diagramme directionnel du faisceau lumineux (16) du récepteur que l'on obtient permette d'éclairer complètement la lentille réceptrice (13).

8. Cellule photoélectrique a réflexion selon la revendication 2, caractérisée par le fait que le réseau de diffraction (17) est constitué par une plaque en matière plastique transparente sur laquelle est gravée une structure de diffraction.

9.  Cellule photoélectrique à réflexion selon la revendication 2, caractérisée par le fait que le faisceau lumineux (16) du récepteur qui est engendré par un réseau de diffraction (17) autour du faisceau lumineux (15) de l'émetteur sert à indiquer la direction de pénétration d'un objet dans la zone de surveillance de la cellule photoélectrique.

10. Cellule photoélectrique à réflexion selon l'une des revendications précédentes, caractérisée par le fait que le réseau de diffraction (17) est disposé dans l'espace qui est situé devant le réflecteur (12).

11. Cellule photoélectrique à réflexion selon l'une des revendications précédentes, caractérisée par le fait que le réseau de diffraction (17) est un élément constitutif du réflecteur (12).

12. Cellule photoélectrique à réflexion selon la revendication 1, caractérisée par le fait que les moyens optiques (17') sont réalisés sous la forme d'un réflecteur à triples prismes (12') dont les prismes sont pourvus de défauts angulaires et de construction.

13. Cellule photoélectrique à réflexion selon l'une des revendications précédentes, caractérisée par le fait que le réflecteur (12) est réalisé sous la forme d'un réflecteur en matière plastique à triples prismes.

Fig. 1

Fig. 2

Fig. 3

Fig. 4a)

$$\phi_1 = a_1 \phi_e$$

$$\phi_0 = a_0 \phi_e$$

$$\phi_{-1} = a_{-1} \phi_e$$

$$\beta_{-1} = -\beta_1$$

Fig. 4b)

$$\phi_1 = a_0 a_1 \phi_e$$

$$a_0 \phi_e$$

$$\phi_0 = a_0^2 \phi_e$$

$$\phi_{-1} = a_0 a_{-1} \phi_e$$

Fig. 5

Fig. 6